# EUROPÄISCHE PATENTSCHRIFT

(11) **EP 2 513 796 B1**
(45) Veröffentlichungstag und Bekanntmachung des Hinweises auf die Patenterteilung: **02.10.2013**
(21) Anmeldenummer: 10788296.1
(22) Anmeldetag: 02.12.2010
(51) Int. Cl.: G06F 11/16, G06F 11/07, G06F 11/14

(54) **VERFAHREN ZUM BETREIBEN EINER RECHENEINHEIT**
METHOD FOR OPERATING A PROCESSOR
PROCÉDÉ PERMETTANT DE FAIRE FONCTIONNER UNE UNITÉ DE CALCUL

(30) Priorität: 15.12.2009 DE 102009054637
(43) Veröffentlichungstag der Anmeldung: 24.10.2012
(73) Patentinhaber: Robert Bosch GmbH, 70442 Stuttgart (DE)
(72) Erfinder: MUELLER, Bernd, 71229 Leonberg (DE); FERCH, Markus, 71723 Grossbottwar (DE); COLLANI, Yorck, 71717 Beilstein (DE); BANSKI, Holger, Palo Alto 943041223 (US)
(86) Internationale Anmeldenummer: PCT/EP2010/068720
(87) Internationale Veröffentlichungsnummer: WO 2011/082904

(56) Entgegenhaltungen:
- EP-A2- 0 969 372
- DE-A1- 3 009 355
- US-A- 5 784 383
- US-A1- 2009 249 034
- US-A1- 2010 169 693

## Beschreibung

Die Erfindung betrifft ein Verfahren zum Betreiben einer Recheneinheit, eine Recheneinheit und ein Computerprogramm

### Stand der Technik

Zur Steigerung der Sicherheit eines elektronischen Steuerungssystems bzw. einer elektronischen Steuerungsvorrichtung, die bspw. in einem Fahrzeug zum Einsatz kommen kann, sind verschiedene Verfahren bekannt. Neben Abstimm- bzw. Voting-Verfahren, bei denen das Ergebnis einer Berechnung durch Mehrheitsentscheid gebildet wird, existieren auch sog. Vergleichs-Verfahren, bei denen die Ergebnisse zweier Recheneinheiten miteinander verglichen werden und im Falle eines Unterschieds eine Abschaltung der Steuerungsvorrichtung vorgenommen wird. In letzterem Falle ist davon auszugehen, dass die Steuerungsvorrichtung durch die Abschaltung auf jeden Fall einen sicheren Zustand einnimmt. Bei bisherigen Vergleichs-Verfahren wird zusätzlich Hardware verwendet. Die Recheneinheiten, deren Ergebnisse verglichen werden sollen, arbeiten mit einem definierten, konstanten Taktversatz bzw. taktgleich. Eine zusätzliche Vergleichslogik vergleicht alle Daten, die über ein als Bus ausgebildetes Netzwerk die Recheneinheiten verlassen, dabei wird ein möglicher Taktversatz berücksichtigt.

Aus der Druckschrift DE 30 09 355 A1 ist ein redundantes Rechnersystem bekannt. Dieses umfasst zwei mit Eingaben und Ausgaben ausgestattete Einzelrechner und mehrere Speicher, wobei die Einzelrechner alle Ergebnisse parallel erarbeiten und bei dem eine Prüfung von verarbeiteten Ergebnissen durch Datenvergleich erfolgt. Dabei sind mit Ausgaben der Einzelrechner rückgekoppelte Schieberegister verbunden, in die die verarbeiteten Ergebnisse seriell eingegeben werden. Weiterhin ist vorgesehen, dass nach Eingabe von jeweils vorgegebenen Datenmengen, die eine Kapazität eines Schieberegisters übersteigen, ein Vergleich der Datenmengen in den Schieberegistern erfolgt.

Die Druckschrift US 2009/0249034 A1 betrifft ein Verfahren zur Erzeugung einer Signatur sowie ein Verfahren zur mehrfachen Ausführung einer Datenverifikation. Dabei werden von einem Prozessor unabhängig von einem Programmierbefehl Anweisungen ausgeführt. Außerdem werden Informationen von abgeschlossenen Anweisungen übermittelt. Diese übermittelten Informationen werden überprüft, wobei eine Reihenfolge der Informationen, die gemäß dem Programmbefehl ausgeführt wurde, verändert werden. Darauf basierend werden Anweisungen zur vollständigen Informationen übermittelt. Diese werden wiederum zum Erzeugen einer Signatur verwendet.

In der Druckschrift EP 0 969 372 A2 ist ein Verfahren zum Ermitteln von Fehlern einer als Bus ausgebildeten Datenverbindung in einem Computersystem beschrieben. Dabei wird ein Fehlersignal der Datenverbindung von einer Überwachungseinheit in eine bestimmte Rückmeldung umgewandelt und an einen Prozessor weitergeleitet. Außerdem ist vorgesehen, dass die Überwachungseinheit eine Quelle des Fehlers bestimmt. Außerdem kann die Überwachungseinheit eine Wahleinheit umfassen, die gleichartige Operationen durch Vergleich von Eingabe- und Ausgabe-Operationen bestimmt.

### Offenbarung der Erfindung

Vor diesem Hintergrund werden ein Verfahren und eine Recheneinheit mit den Merkmalen der unabhängigen Patentansprüche sowie ein Computerprogramm vorgestellt. Weitere Ausgestaltungen der Erfindung ergeben sich aus den abhängigen Patentansprüchen und der Beschreibung.

Mit der Erfindung wird u. a. ein asynchrones Vergleichen mit mindestens zwei MISR (Multiple Input Shift Register) bzw. MIS-Registern oder Mehreingangs-Signaturregistern und demnach mindestens zwei Signaturregistern mit mehreren Eingängen bereitgestellt.

Im Rahmen der Erfindung ist vorgesehen, auf mindestens zwei von mindestens zwei Rechenkernen bzw. Prozessoren, üblicherweise zwei Rechenkernen, der Recheneinheit jeweils einen Task bzw. eine Aufgabe oder einen Prozess zu starten, wobei beide Aufgaben in einer Ausführungsform denselben Algorithmus berechnen und Zwischenergebnisse unter Verwendung des zugeordneten MISR speichern. Anschließend werden die Inhalte der mindestens zwei MISR, die den mindestens zwei Tasks zugeordnet sind, verglichen. Die mindestens zwei der mindestens zwei Rechenkerne, die auch als Cores bezeichnet werden können, und auf denen die Tasks berechnet werden, werden in der Regel nicht taktgenau synchronisiert.

Die Recheneinheit umfasst mehrere Komponenten, d. h. die mindestens zwei Rechenkerne, die dazu ausgebildet sind, Aufgaben bzw. Tasks typischerweise redundant auszuführen. Bei den Tasks handelt es sich üblicherweise um Software-Tasks. Als weitere Komponenten der Recheneinheit sind die Signaturregister vorgesehen, wobei mindestens zwei der mindestens zwei Rechenkerne derartigen Signaturregistern zugeordnet sind. Außerdem kann die Recheneinheit Hardwaremodule aufweisen, z. B. eine Zielhardware oder Speicherzellen. Funktionen der Komponenten werden u. a. durch Durchführung von Aufgaben bzw. Tasks ausgeführt. Im Rahmen der Erfindung umfassen die Aufgaben z. B. Anwendungstasks, Vergleichstasks und Schreibtasks.

Bei einer dezidierten Vergleichslogik mit definiertem, konstantem Taktversatz ist vorgesehen, dass die mindestens zwei der mindestens zwei Rechenkerne in der Regel denselben Programmcode abarbeiten. Ein zeitweilig parallele Verarbeitung unterschiedlicher Programme wird typischerweise nicht vorgenommen. Die Performanz eines solchen Systems entspricht der eines Einprozessorsystems. Besteht die Möglichkeit, einen Vergleicher bzw. eine Vergleicher-Anordnung zeitweise abzuschalten, bspw. in einem DCSL-System, das eine Umschalteinrichtung zwischen einem Betriebsmodus und einem Vergleichsmodus aufweist, müssen die Rechenkerne bzw. Prozessoren aufwendig synchronisiert werden, wenn sie zurück in den Vergleichsmodus geschaltet werden sollen.

Die hier beschriebene Erfindung ermöglicht in Ausgestaltung den Vergleich von redundant berechneten Größen, ohne dass die Rechenkerne taktgleich bzw. mit einem konstanten Taktversatz arbeiten müssen. Es wird keine dezidierte Vergleichslogik verwendet, die an die Rechenkerne gebunden ist. Stattdessen werden die in den mindestens zwei der mindestens zwei Rechenkerne enthaltenen Vergleichsoperatoren für diesen Zweck verwendet. Das Verfahren überprüft nicht die Korrektheit aller Ergebnisse, üblicherweise Zwischenergebnisse, sondern nur die besonders relevanten Ergebnisse. Um die Menge an zu vergleichenden Größen zu minimieren, werden zwei MISR (Multi Input Shift Register) eingesetzt.

Die erfindungsgemäße Recheneinheit ist dazu ausgebildet, sämtliche Schritte des vorgestellten Verfahrens durchzuführen. Dabei können einzelne Schritte dieses Verfahrens auch von einzelnen Komponenten der Recheneinheit durchgeführt werden. Weiterhin können Funktionen der Recheneinheit oder Funktionen von einzelnen Komponenten der Recheneinheit als Schritte des Verfahrens umgesetzt werden. Außerdem ist es möglich, dass Schritte des Verfahrens als Funktionen wenigstens einer Komponente der Recheneinheit oder der gesamten Recheneinheit realisiert werden.

Die Erfindung betrifft weiterhin ein Computerprogramm mit Programmcodemitteln, um alle Schritte eines beschriebenen Verfahrens durchzuführen, wenn das Computerprogramm auf einem Computer, insbesondere in einer erfindungsgemäßen Recheneinheit, ausgeführt wird.

Weitere Vorteile und Ausgestaltungen der Erfindung ergeben sich aus der Beschreibung und den beiliegenden Zeichnungen.

Kurze Beschreibung der Zeichnungen
Figur 1 zeigt in schematischer Darstellung eine Recheneinheit.
Figur 2 zeigt in schematischer Darstellung eine zweite Recheneinheit.
Figur 3 zeigt in schematischer Darstellung eine Ausführungsform einer erfindungsgemäßen Recheneinheit zur Durchführung einer Ausführungsform des erfindungsgemäßen Verfahrens.

Die Erfindung wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

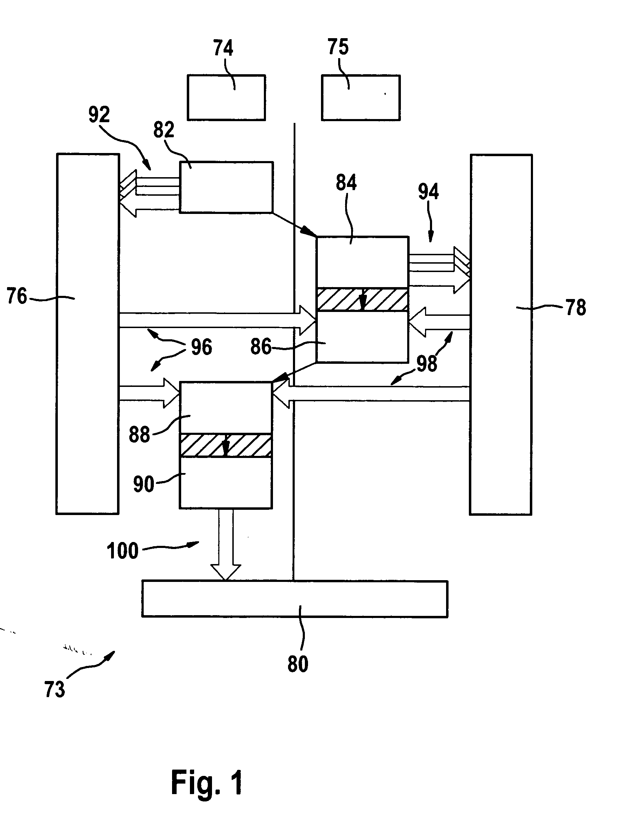

Eine Recheneinheit 73 ist in Figur 1 schematisch dargestellt. Diese Recheneinheit 73 umfasst einen ersten Rechenkern 74 (Core₀), dem ein erstes Signaturregister 76 mit mehreren Eingängen (MISR₀) zugeordnet ist, einen zweiten Rechenkern 75, dem ein zweites Signaturregister 78 mit mehreren Eingängen (MISR₁) zugeordnet ist, und eine Zielhardware 80.

Diese erste Figur betrifft ein Verfahren, bei dem keine Synchronisationspunkte, z. B. Barrieren, verwendet werden. Die zeitlichen Abhängigkeiten werden hier durch das Starten mehrerer Aufgaben (Tasks) 82, 84, 86, 88, 90 in einer vorgegebenen Reihenfolge sichergestellt. Dabei aktiviert jeder Task seinen eigenen Folgetask. Bei dieser sowie bei den nachfolgenden Ausführungsformen ist vorgesehen, dass die Werte der Signaturregister (Multi Input Shift Register, MISR) zum Aufgabenkontext gehören und bei einem Wechsel der Aufgaben 82, 84, 86, 88, 90 gesichert bzw. wieder hergestellt werden können. Die verwendeten Aufgaben 82, 84, 86, 88, 90 sind an den jeweiligen Rechenkern 74, 75 gebunden und werden somit nur auf diesem ausgeführt.

Zunächst wird in einem ersten Schritt auf dem ersten Rechenkern 74 (Core₀) eine erste Aufgabe 82 bzw. ein Anwendungstask A₀ aktiviert und vom Betriebssystem zur Ausführung gebracht. Während der Ausführung wird in dem Anwendungstask A₀ ein Algorithmus abgearbeitet und vom Anwendungsentwickler definierte Ergebnisse 92, d. h. Zwischen- und Endergebnisse, in das erste Signaturregister 76 MISR₀ geschrieben. Nachdem alle Ergebnisse 92 berechnet und alle Zwischen- und Endergebnisse in das MISR geschrieben sind, wird eine zweite Aufgabe 84, hier ein Anwendungstask A₁, auf dem zweiten Rechenkern 75 (Core₁) aktiviert.

Bei einem zweiten Schritt erfolgt in dem Anwendungstask A₁ nun ebenfalls die Berechnung der Ergebnisse 94. Dabei kann sowohl der gleiche als auch ein anderer Algorithmus als in der ersten Aufgabe 82 (Anwendungstask A₀) verwendet werden. Entscheidend ist hierbei, dass die gleichen Ergebnisse 94 berechnet und die gleichen Zwischen- und Endergebnisse in das zweite Signaturregister 78 geschrieben werden. Auf welche Art und Weise die Ergebnisse 94 berechnet werden, ist somit unerheblich. Sind alle Ergebnisse 94 berechnet und alle relevanten Zwischen- und Endergebnisse in das zweite Signaturregister 78 (MISR₁) geschrieben, wird als dritte Aufgabe 86 ein Vergleichertask B₁ auf dem zweiten Rechenkern 75 (Core₁) aktiviert.

In dem Vergleichertask B₁ als dritte Aufgabe 86 werden in einem dritten Schritt die Werte der beiden MISR gelesen und verglichen. Nur wenn bei der Prüfung inhaltliche Übereinstimmung festgestellt wird, wird als Vierte Aufgabe 88 ein Vergleichertask B₀ auf dem ersten Rechenkern 74 (Core₀) aktiviert. In allen anderen Fällen wird eine entsprechende Fehlerbehandlung durchgeführt und insbesondere die vierte Aufgabe 88 als Vergleicher- bzw. Folgetask B₀ nicht aktiviert bzw. gestartet.

In einem vierten Schritt werden mit dem Vergleichertask B₀ ebenfalls die Werte 96, 98 der beiden MISR gelesen und verglichen. Nur wenn bei der Prüfung eine inhaltliche Übereinstimmung festgestellt wird, wird ein Schreibtask C₀ als fünfte Aufgabe 90 auf dem ersten Rechenkern 74 (Core₀) aktiviert. In allen anderen Fällen wird eine entsprechende Fehlerbehandlung durchgeführt und der Schreibtask C₀ als Folgetask üblicherweise nicht aktiviert bzw. gestartet.

Die berechneten Ergebnisse 100 werden in einem fünften Schritt von der fünften Aufgabe 90 (Schreibtask C₀) auf die Zielhardware 80 geschrieben.

Der Vergleich der beiden MISR durch die dritte Aufgabe 86 (Vergleichertask B₁) und die vierte Aufgabe 88 (Vergleichertask B₀) erfolgt deshalb redundant, damit Fehler in den Rechenkernen 74, 75 ausgeschlossen bzw. entdeckt werden. Sollte einer der Rechenkerne 74, 75 den Vergleich der beiden Signaturregister 76, 78 falsch interpretieren, falls diese bspw. inhaltlich unterschiedlich sind, und wird dieser Unterschied aber aufgrund eines Fehlers nicht erkannt, dann werden die Schreiboperationen des anderen Rechenkerns 74, 75 auf die Zielhardware 80 durch die fünfte Aufgabe 90 (Schreibtask C₀) verhindert, weil die Verarbeitungskette durch ihn zuvor unterbrochen wird.

Bei einer Variante können die Tasks A₁ und B₁ sowie die Tasks B₀ und C₀ jeweils zu einer Aufgabe bzw. einem Task zusammengefasst werden, wenn die Reihenfolge des auszuführenden Codes beibehalten wird. Ob Einzeltasks oder zusammengefasste Tasks sinnvoller sind, hängt von der Anwendung, von der zeitlichen Planung (Scheduling) und der Laufzeit der Tasks ab. Darüber kann von Fall zu Fall entschieden werden, wodurch das Scheduling optimiert werden kann.

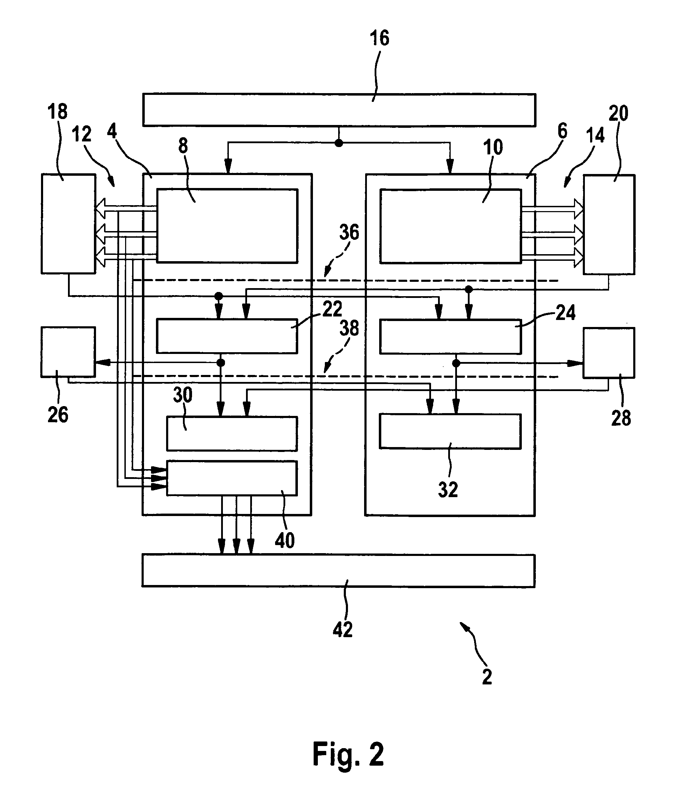

In den anhand von Figur 2 gezeigten Verfahren zum Betreiben einer Recheneinheit 2 ist in einem ersten Schritt vorgesehen, eine Berechnung aus Sicherheitsgründen redundant auf zwei Rechenkernen 4, 6 bzw. Cores auszuführen. Dabei werden zeitnah zwei Aufgaben 8, 10 bzw. Tasks T_{W} und T_{R}, die jeweils an einen der beiden Rechenkerne 4, 6, (C_{W} und C_{R}) bzw. Prozessoren gebunden sind, aktiviert. Möglicherweise kann mit entsprechender Unterstützung durch das Betriebssystem 16 den Tasks dieselbe Priorität zugeordnet werden. Sollte aus Prioritätsgründen zunächst nur einer der Tasks starten und der zweite Task warten müssen, so kann dies akzeptiert werden. Eine exakte Gleichzeitigkeit ist nicht notwendig.

In einem zweiten Schritt wird zunächst mit jeder Aufgabe 8, 10 ein Algorithmus berechnet. Ergebnisse 12, 14, d. h. relevante Zwischenergebnisse und alle relevanten Endergebnisse, werden auf ein Signaturregister 18, 20, das mehrere Eingänge umfasst (MISR), geschrieben. Welche Ergebnisse 12, 14 in das MISR geschrieben werden, bestimmt in einer Ausführungsform ein Anwendungsentwickler. Dabei wird definiert, welche Ergebnisse 12, 14 und/oder welche Arten von Ergebnissen 12, 14 in das jeweilige Signaturregister 18, 20 geschrieben werden. Jedem Rechenkern 4, 6 ist daher ein eigenes Signaturregister 18, 20 zugeordnet, das beim Starten der Aufgabe 8, 10 initialisiert wird. Sollte der Task bzw. die Aufgabe 8, 10 von einem anderen Task unterbrochen werden, der ebenfalls redundant arbeitet und ebenfalls das MISR verwendet, wird das MISR zusammen mit dem Kontext einer Aufgabe 8, 10 und somit eines Tasks unter Umständen mittels des Betriebssystems 16 gespeichert und später restauriert.

In einem dritten Schritt erfolgt nach Abschluss aller Berechnungen eine Synchronisation 36 der Aufgaben 8, 10, z. B. durch eine sog. Barriere. Dadurch ist sichergestellt, dass beide Tasks ihre Berechnungen abgeschlossen haben.

Ein Vergleichen der Inhalte der beiden MISR wird in einem vierten Schritt vorgenommen. Diese müssen im Normalfall gleich sein. Das Ergebnis des Vergleichs 22, 24 schreibt jeder Task in eine eigene Speicherzelle 26, 28, die je nach Architektur als lokales RAM ausgebildet sein kann.

In einem nächsten fünften Schritt vergleichen die Tasks im Rahmen jeweils einer Prüfung 30, 32 ihre Vergleichsergebnisse. Hierzu wird für die Tasks eine Synchronisation 38 vorgenommen. Mit dieser Maßnahme kann festgestellt werden, ob die Vergleichsoperation in einem der Rechenkerne 4, 6 fehlerhaft ist. Ist dies der Fall, kann ein Unterschied in den Signaturregistern 18, 20 übersehen werden.

In einem letzten Schritt wird ein Schreibvorgang 40 durchgeführt, wobei von der ersten Aufgabe 8 T_{W} die relevanten Daten von dem ersten Rechenkern 4 C_{W} auf die Zielhardware 42 geschrieben werden.

Die Synchronisationen 36, 38, die hier benötigt werden, können durch eine Barriere oder wechselseitige Eventmechanismen, bspw. nach dem OSEK-Betriebssystem Standard für offene Systeme und deren Schnittstellen für die Elektronik im Kraftfahrzeug, realisiert werden.

Zur Synchronisation 36, 38 der Aufgaben 8, 10 bzw. Anwendungen T_{W} und T_{R} kann in Ausgestaltung auch ein erweitertes MISR verwendet werden. Dafür wird das MISR um ein zusätzliches Register erweitert, in dem die Anzahl der in das MISR geschriebenen Werte gezählt wird. Diese erweiterte Funktionalität kann vollständig in Hardware umgesetzt werden. Ebenso wie der Inhalt des MISR wird auch dieses Zählregister initialisiert und mit einem Wert restauriert. Zur Synchronisation können die Tasks T_{W} und T_{R} nach einem Durchlauf den Wert des eigenen Zählregisters mit dem Wert des Zählregisters des jeweils anderen MISR prüfen. Entspricht der Wert des anderen Zählregisters dem Wert des eigenen Zählregisters, dann kann die Verarbeitung fortgesetzt werden. Alternativ kann hier auch ein erwarteter Wert vorgegeben und ein aktueller Wert auf diesen geprüft werden.

Im Fehlerfall können Vergleichsfehler an zwei Stellen erkannt werden, nämlich beim Vergleich der MISR im vierten Schritt und/oder beim Vergleich der Vergleichsergebnisse im fünften Schritt.

In beiden Fällen besteht die Möglichkeit, durch einen geeigneten Mechanismus die weitere Verarbeitung abzubrechen. Wie dies geschieht, hängt in der Regel von den Sicherheitsanforderungen der Anwendung ab.

In einer ersten Variante werden von den beiden Aufgaben 8, 10 bzw. Tasks Tw und T_{R} unterschiedliche Algorithmen gerechnet, die aber dasselbe Ergebnis liefern sollen. Demnach können nur noch Werte in die MISR geschrieben werden, die in beiden Algorithmen gleich auftreten. Dies ermöglicht die Verwendung von diversitärer Software und die Entdeckung von Softwarefehlern. Weiterhin wird die Anzahl der Werte, die man in das MISR schreiben kann, reduziert, dabei sind allerdings Rundungsfehler bei den Ergebnissen zu beachten.

In einer zweiten Variante kann das Schreiben des Ergebnisses in die Speicherzelle 26, 28 (RAM) entfallen. Im Vergleichsfehlerfall, wenn die Aufgaben 8, 10 verschiedene Werte liefern, wird der Vergleich mit einer entsprechenden Fehlerbehandlung auf beiden Rechenkernen 4, 6 abgebrochen. Um ein derartiges Verhalten zu realisieren, wird die Vergleichsoperation auf dem zweiten Core unabhängig von seinem Vergleichstest ebenfalls beendet, das kann bspw. über eine Zeitsicherung eines Synchronisationspunkts erfolgen. Daraus resultiert, dass keine Schreiboperationen auf der Zielhardware 42 erfolgen.

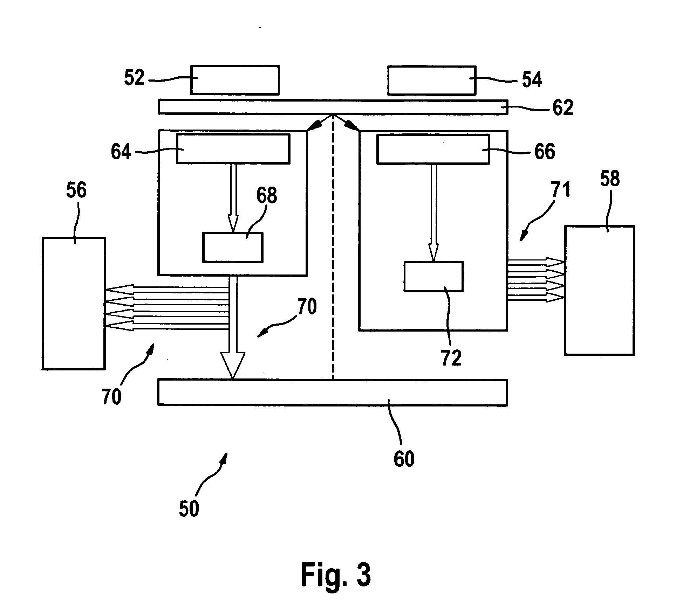

Bei einer Ausführungsform des erfindungsgemäßen Verfahrens zum Betrei-ben einer in Figur 3 schematisch dargestellten Recheneinheit 50 ist vorgesehen, dass auf der Systemebene eine kurzzeitige fehlerhafte Auswirkung auf die Hardware akzeptiert wird. Dadurch ergibt sich, dass die meisten Synchronisationsbarrieren entfallen und damit eine höhere Durchschnittsperformance bzw. Durchschnittsleistung und eine schwächere Kopplung der beiden Cores erreicht wird.

Ein Basisaufbau einer Ausführungsform der erfindungsgemäßen Rechen-einheit 50 ist in Figur 3 schematisch gezeigt. Diese Recheneinheit 50 umfasst einen ersten als CPU1 ausgebildeten Rechenkern 52 und einen zweiten als CPU2 ausgebildeten Rechenkern 54, wobei jedem Rechenkern 52, 54 ein Signaturregister 56, 58 mit mehreren Eingängen zugeordnet ist. Weiterhin zeigt Figur 3 eine Zielhardware 60 und ein Betriebssystem (OS) 62 der Recheneinheit 50. Auch hier werden zwei Aufgaben 64, 66 bzw. Anwendungen oder Tasks von dem Betriebssystem 62 gleichzeitig oder zu annähernd gleichen Zeitpunkten gestartet.

Auch hier spielt die Betriebssystemstruktur keine Rolle, d. h. das Verfahren ist unabhängig davon durchführbar, ob ein Betriebssystem 62 oder mehrere Betriebssysteme 62 vorgesehen sind. In diesem Fall schreibt aber der erste der beiden Rechenkerne 52 bzw. Cores bei einem Schreibvorgang 68 ohne vorherigen Vergleich seine Ergebnisse 70 und Zwischenergebnisse direkt auf die Zielhardware 60, was bei einem Fehlerfall auch für fehlerhafte Ergebnisse 70 gilt. Die Ergebnisse 71 eines Schreibvorgangs 72 der zweiten Aufgabe 66 werden lediglich in das zweite Signaturregister 58 geschrieben. Zudem wird sichergestellt, dass zumindest die relevanten Zwischenergebnisse nicht nur auf die Zielhardware 60, sondern auch in das erste Signaturregister 56 (MISR) geschrieben werden.

Hierzu gibt es mehrere Möglichkeiten. Der Schreibvorgang 72 kann bspw. als separater Schreibbefehl in der Software realisiert werden. Es ist aber auch möglich, die Hardware so zu gestalten, dass eine Abzweigung in den Schreibpfad eingebaut wird und die Hardware damit den Schreibbefehl an zwei Stellen gleichzeitig oder zumindest für die Software transparent durchführt. Diese Abzweigung kann über ein Steuerkommando an- und ausgeschaltet werden. Dies bedeutet, dass die Abzweigung bei jedem Zwischenergebnis eingeschaltet wird, wenn das Zwischenergebnis in das MISR geschrieben werden soll. Damit benötigt die Software nur noch einen Befehl zum Schreiben.

Der zweite Rechenkern 54 (Core) erhält die gleiche Aufgabe 66, allerdings werden bei ihm alle entsprechenden Schreibbefehle nur in das zugeordnete Signaturregister 58 (MISR) geführt.

Damit berechnen die beiden Rechenkerne 52, 54 nicht genau das Gleiche, da sie unterschiedliche Schreibcharakteristiken aufweisen. Der Unterschied kann aber automatisiert und typischerweise durch ein Offline Tool (OLT) oder ein entsprechendes Werkzeug erzeugt werden.

Die Durchführung der Vergleichsoperation umfasst Untervarianten bzw. Optionen der anhand von Figur 3 beschriebenen Ausführungsform, wobei die Untervarianten miteinander beliebig kombiniert werden können.

Mit einer ersten Option ist es möglich, die Vergleichsoperation in der Aufgabe 64, 66 bzw. im Task selbst zu verwenden. In diesem Fall wartet jede der beiden Aufgaben 64, 66 nach dem letzten Schreiben auf das MISR, bis den Aufgaben 64, 66 ein Signal von der Hardware ggf. über die Software bereitgestellt wird, das darüber informiert, dass auch das jeweilig andere MISR-Resultat vorliegt. Damit die MISR wissen, wann das letzte Ergebnis geschrieben wurde, wird entweder von der Software auf jedem beteiligten Core ein Signal an den MISR gesendet, oder es wird dem jeweiligen MISR vor dem Schreiben des ersten Werts durch die jeweilige Software signalisiert, wie viele Werte geschrieben werden sollen. Der Task wird auf dieses Signal hin wieder aktiv, führt den Vergleich durch, gibt ggf. die entsprechenden Fehlerreaktionen aus und wird dann beendet.

Bei der Erfindung ist vorgesehen, für den Vergleich auf jedem Rechen-kern 52, 54 eine eigene Vergleichsaufgabe bzw. einen eigenen Vergleichstask aufzusetzen. Diese Tasks werden vom jeweilig zu überwachenden Task gestartet und können den Vergleich durchführen, sobald auch der MISR-Wert des anderen Cores zur Verfügung steht.

Einen Hardware-Vergleicher in der Recheneinheit 50 vorzusehen, ist Gegenstand einer Option. Dieser Vergleicher kann bspw. selbständig die MIS-Register lesen. Typischerweise wird aber eher zu Ende der Tasks das MIS-Register dem Vergleicher durch den Task selbst zur Verfügung gestellt. Dies kann auch mit einem OLT realisiert werden.

In der Regel wird sichergestellt, dass die Vergleichsoperation abhängig von der Untervariante sogar auf beiden Rechenkernen 52, 54 durchgeführt wird. Üblicherweise wird dazu eine Zeitüberwachung, beispielsweise über einen Timer, verwendet. Die Zeit zwischen dem letzten Schreibbefehl in das MISR und dem Abschluss der Vergleichsoperation wird dabei begrenzt. Dazu wird der Timer aufgezogen, nachdem das MISR endgültig beschrieben wurde. Demnach wird durch die Zeitüberwachung ein Wert für eine Länge eines Zeitintervalls definiert, innerhalb dessen die Vergleichsoperation abzuschließen ist. Falls das Zeitintervall abläuft, bevor der Vergleich durchgeführt wurde, wird ein Fehler detektiert.

Bei den hier beschriebenen Ausführungsformen des erfindungsgemäßen Verfahrens kann sich ergeben, dass möglicherweise ein Rechenkern 4, 6, 52, 54, 74, 75 in eine Endlosschleife gerät oder aus anderen Gründen vorzeitig beendet bzw. terminiert wird, z. B. durch einen unerlaubten Zugriff auf geschützte Speicherzellen. An allen Stellen, an denen sich Aufgaben 8, 10, 64, 66, 88, 90 synchronisieren, lässt sich ein derartiger Fehler durch eine Zeitbedingung erkennen. Der Rechenkern 4, 6, 52, 54, 74, 75, der einen Synchronisationspunkt als erster erreicht, wartet dort nur für eine endliche Zeit. Wird die Zeit überschritten, ohne dass der jeweils andere Rechenkern 4, 6, 52, 54, 74, 75 ebenfalls den Synchro-nisationspunkt erreicht, wird ein Fehler ausgelöst. Bei dieser Art der Laufzeitüberwachung wird beachtet, dass die Aufgaben 8, 10, 64, 66, 82, 84, 86, 88, 90, auf die gewartet wird, möglicherweise unterbrochen wurden, wodurch ihre Gesamtlaufzeit beeinflusst wird. Entweder wird eine Frist (Deadline) ermittelt, die lang genug ist, um alle möglichen Unterbrechungen mit zu berücksichtigen, oder die Zeitmessung auf dem ersten Rechenkern 4, 6, 52, 54, 74, 75, wird unterbrochen, wenn auf dem zweiten Rechenkern 4, 6, 52, 54, 74, 75 etwas anderes als der korrespondierende Task gerechnet wird.

Die Erfindung kann für alle Steuergeräte, bei denen gewisse Sicherheitsanforderungen erfüllt werden müssen, eingesetzt werden, wie bspw. Multicore-Systeme bzw. Einrichtungen, die bereits mehrere gleichartige aber unabhängige Recheneinheiten aufweisen.

## Patentansprüche

1. Verfahren zum Betreiben einer Recheneinheit (2, 50, 73), die mindestens zwei Rechenkerne (4, 6, 52, 54, 74, 75) aufweist, wobei mindestens zwei der mindestens zwei Rechenkerne (4, 6, 52, 54, 74, 75) jeweils ein Signaturregister (18, 20, 56, 58, 76, 78), das mehrere Eingänge aufweist, zugeordnet ist, bei dem von zwei der Rechenkerne (4, 6, 52, 54, 74, 75) zumindest jeweils eine Aufgabe (8, 10, 64, 66, 82, 84, 86, 88, 90) durchgeführt wird, wobei mit jeder Aufgabe (8,10, 64, 66, 82, 86, 88, 90) ein Algorithmus berechnet wird, wobei von jedem Rechenkern (4, 6, 52, 54, 74, 75) berechnete Ergebnisse (12, 14, 70, 71, 92, 94) in das zugeordnete Signaturregister (18, 20, 56, 58, 76, 78) geschrieben und die in die Signaturregister (18, 20, 56, 58, 76, 78) geschriebenen Ergebnisse (12, 14, 70, 71, 92, 94) verglichen werden,
**dadurch gekennzeichnet, dass**
die Aufgaben (8, 10, 64, 66, 82, 84, 86, 88, 90) in einer vorgegebenen Reihenfolge gestartet werden, wobei von jedem Rechenkern (4, 6, 52, 54, 74, 75) eine erste, als Anwendungstask ausgebildete Aufgabe (8, 10, 64, 66, 82, 84, 86, 88, 90) durchgeführt wird, von der jeweils mindestens eine zweite, als Vergleichertask ausgebildete Aufgabe (8, 10, 64, 66, 82, 84, 86, 88, 90) auf dem jeweiligen Rechenkern aktiviert wird, wobei mit jeder Aufgabe (8, 10, 64, 66, 82, 84, 86, 88, 90), die als Vergleichertask ausgebildet ist, Werte der beiden Signaturregister (18, 20, 56, 58, 76, 78) verglichen werden.

2. Verfahren nach Anspruch 1, bei dem vorgesehen ist, dass die Algorithmen bei einer Berechnung dieselben Ergebnisse (12, 14, 70, 71, 92, 94) liefern sollen, wobei von den mindestens zwei der mindestens zwei Rechenkerne (4, 6, 52, 54, 74, 75) derselbe Algorithmus berechnet wird oder wobei von den mindestens zwei der mindestens zwei Rechenkerne (4, 6, 52, 54, 74, 75) verschiedene Algorithmen berechnet werden.

3. Verfahren nach einem der voranstehenden Ansprüche, bei dem mindestens zwei Aufgaben (8, 10, 64, 66, 82, 84, 86, 88, 90) miteinander synchronisiert werden.

4. Verfahren nach einem der voranstehenden Ansprüche, bei dem Vergleichsergebnisse von jeder Aufgabe (8, 10, 64, 66, 82, 84, 86, 88, 90) in eine eigene Speicherzelle geschrieben werden, und bei dem die Vergleichsergebnisse miteinander verglichen werden.

5. Verfahren nach einem der voranstehenden Ansprüche, bei dem den Signaturregistern (18, 20, 56, 58, 76, 78) signalisiert wird, wann das letzte Ergebnis geschrieben wird, wobei den Signaturregistern (18, 20, 56, 58, 76, 78) von der Software auf jedem beteiligten Rechenkern (4, 6, 52, 54, 74, 75) ein Signal gesendet wird, oder wobei von dem jeweiligen Signaturregister (18, 20, 56, 58, 76, 78) vor dem Schreiben eines ersten Ergebnisses durch die jeweilige Software signalisiert wird, wie viele Werte geschrieben werden sollen.

6. Recheneinheit, die mindestens zwei Rechenkerne (4, 6, 52, 54, 74, 75) aufweist, wobei mindestens zwei der mindestens zwei Rechenkerne (4, 6, 52, 54, 74, 75) jeweils ein Signaturregister, das mehrere Eingänge aufweist, zugeordnet ist, wobei zwei der Rechenkerne (4, 6, 52, 54, 74, 75) dazu ausgebildet sind, zumindest jeweils eine Aufgabe (8, 10, 64, 66, 82, 84, 86, 88, 90) durch-zuführen, mit jeder Aufgabe (8, 10, 64, 66, 82, 84, 86, 88, 90) einen Algorithmus zu berechnen und berechnete Ergebnisse (12, 14, 70, 71, 92, 94) in das zugeordnete Signaturregister (18, 20, 56, 58, 76,78) zu schreiben, und wobei mindestens eine Komponente der Recheneinheit (2, 50, 73) dazu ausgebildet ist, die in die Signaturregister (18, 20, 56, 58, 76, 78) geschriebenen Ergebnisse (12, 14, 70, 71, 92, 94) zu vergleichen,
**dadurch gekennzeichnet, dass**
die Aufgaben (8, 10, 64, 66, 82, 84, 86, 88, 90) in einer vorgegebenen Reihenfolge gestartet werden, wobei jeder Rechenkern (4, 6, 52, 54, 74, 75) eine erste, als Anwendungstask ausgebildete Aufgabe (8, 10, 64, 66, 82, 84, 86, 88, 90) durchführt, die jeweils mindestens eine zweite, als Vergleichertask ausgebildete Aufgabe (8, 10, 64, 66, 82, 84, 86, 88, 90) auf dem jeweiligen Rechenkern akti-viert, wobei jede Aufgabe (8, 10, 64, 66, 82, 84, 86, 88, 90), die als Vergleichertask ausgebildet ist, Werte der beiden Signaturregister (18, 20, 56, 58, 76, 78) vergleicht.

7. Recheneinheit nach Anspruch 6, bei dem die Rechenkerne (4, 6, 52, 54, 74, 75) Vergleichsoperatoren aufweisen, die dazu ausgebildet sind, die Ergebnisse (12, 14, 70, 71, 92, 94) zu vergleichen.

8. Computerprogramm mit Programmcodemitteln, um alle Schritte eines Verfahrens nach einem der Ansprüche 1 bis 5 durchzuführen, wenn das Computerprogramm auf einem Computer, insbesondere in einer entsprechenden Recheneinheit (2, 50, 73) nach Anspruch 6 oder 7, ausgeführt wird.

## Claims

1. Method for operating a computation unit (2, 50, 73) having at least two computation cores (4, 6, 52, 54, 74, 75), at least two of the at least two computation cores (4, 6, 52, 54, 74, 75) each being assigned a signature register (18, 20, 56, 58, 76, 78) having a plurality of inputs, in which two of the computation cores (4, 6, 52, 54, 74, 75) each carries out at least one task (8, 10, 64, 66, 82, 84, 86, 88, 90), an algorithm being calculated with each task (8, 10, 64, 66, 82, 84, 86, 88, 90), results (12, 14, 70, 71, 92, 94) calculated by each computation core (4, 6, 52, 54, 74, 75) being written to the assigned signature register (18, 20, 56, 58, 76, 78) and the results (12, 14, 70, 71, 92, 94) written to the signature registers (18, 20, 56, 58, 76, 78) being compared,
**characterized in that**
the tasks (8, 10, 64, 66, 82, 84, 86, 88, 90) are started in a predefined order, each computation core (4, 6, 52, 54, 74, 75) carrying out a first task (8, 10, 64, 66, 82, 84, 86, 88, 90) in the form of an application task which respectively activates at least one second task (8, 10, 64, 66, 82, 84, 86, 88, 90) in the form of a comparator task on the respective computation core, values of the two signature registers (18, 20, 56, 58, 76, 78) being compared using each task (8, 10, 64, 66, 82, 84, 86, 88, 90) in the form of a comparator task.

2. Method according to Claim 1, in which provision is made for the algorithms to provide the same results (12, 14, 70, 71, 92, 94) during a calculation, the same algorithm being calculated by the at least two of the at least two computation cores (4, 6, 52, 54, 74, 75), or different algorithms being calculated by the at least two of the at least two computation cores (4, 6, 52, 54, 74, 75).

3. Method according to one of the preceding claims, in which at least two tasks (8, 10, 64, 66, 82, 84, 86, 88, 90) are synchronized with one another.

4. Method according to one of the preceding claims, in which comparison results from each task (8, 10, 64, 66, 82, 84, 86, 88, 90) are written to a separate memory cell, and in which the comparison results are compared with one another.

5. Method according to one of the preceding claims, in which it is signalled to the signature registers (18, 20, 56, 58, 76, 78) when the last result is written, a signal being transmitted to the signature registers (18, 20, 56, 58, 76, 78) by the software on each involved computation core (4, 6, 52, 54, 74, 75), or the respective software signalling to the respective signature register (18, 20, 56, 58, 76, 78), before writing a first result, how many values are intended to be written.

6. Computation unit having at least two computation cores (4, 6, 52, 54, 74, 75), at least two of the at least two computation cores (4, 6, 52, 54, 74, 75) each being assigned a signature register having a plurality of inputs, two of the computation cores (4, 6, 52, 54, 74, 75) being designed to each carry out at least one task (8, 10, 64, 66, 82, 84, 86, 88, 90), to calculate an algorithm with each task (8, 10, 64, 66, 82, 84, 86, 88, 90) and to write calculated results (12, 14, 70, 71, 92, 94) to the assigned signature register (18, 20, 56, 58, 76, 78), and at least one component of the computation unit (2, 50, 73) being designed to compare the results (12, 14, 70, 71, 92, 94) written to the signature registers (18, 20, 56, 58, 76, 78),
**characterized in that**
the tasks (8, 10, 64, 66, 82, 84, 86, 88, 90) are started in a predefined order, each computation core (4, 6, 52, 54, 74, 75) carrying out a first task (8, 10, 64, 66, 82, 84, 86, 88, 90) in the form of an application task which respectively activates at least one second task (8, 10, 64, 66, 82, 84, 86, 88, 90) in the form of a comparator task on the respective computation core, each task (8, 10, 64, 66, 82, 84, 86, 88, 90) in the form of a comparator task comparing values of the two signature registers (18, 20, 56, 58, 76, 78).

7. Computation unit according to Claim 6, in which the computation cores (4, 6, 52, 54, 74, 75) have comparison operators which are designed to compare the results (12, 14, 70, 71, 92, 94).

8. Computer program having program code means for carrying out all steps of a method according to one of Claims 1 to 5 when the computer program is executed on a computer, in particular in a corresponding computation unit (2, 50, 73) according to Claim 6 or 7.

## Revendications

1. Procédé de conduite d'une unité de calcul (2, 50, 73) qui présente deux ou plusieurs noyaux de calcul (4, 6, 52, 54, 74, 75),
un registre de signatures (18, 20, 56, 58, 76, 78) doté de plusieurs entrées étant associé à au moins deux des deux ou plusieurs noyaux de calcul (4, 6, 52, 54, 74, 75),
au moins une tâche (8, 10, 64, 66, 82, 84, 86, 88, 90) étant exécutée par deux des noyaux de calcul (4, 6, 52, 54, 74, 75),
un algorithme étant calculé pour chaque tâche (8, 10, 64, 66, 82, 84, 86, 88, 90),
les résultats (12, 14, 70, 71, 92, 94) calculés par chaque noyau de calcul (4, 6, 52, 54, 74, 75) étant inscrits dans le registre de signatures (18, 20, 56, 58, 76, 78) associé et les résultats (12, 14, 70, 71, 92, 94) inscrits dans les registres de signatures (18, 20, 56, 58, 76, 78) étant comparés,
**caractérisé en ce que**
les tâches (8, 10, 64, 66, 82, 84, 86, 88, 90) sont lancées dans une succession prédéterminée,
**en ce qu'**une première tâche (8, 10, 64, 66, 82, 84, 86, 88, 90) configurée comme tâche d'application et activant moins une deuxième tâche (8, 10, 64, 66, 82, 84, 86, 88, 90) configurée comme tâche de comparaison est exécutée par chaque noyau de calcul (4, 6, 52, 54, 74, 75) et
**en ce que** les valeurs des deux registres de signatures (18, 20, 56, 58, 76, 78) sont comparées par chaque tâche (8, 10, 64, 66, 82, 84, 86, 88, 90) configurée comme tâche de comparaison.

2. Procédé selon la revendication 1, dans lequel les algorithmes doivent délivrer lors d'un calcul les mêmes résultats (12, 14, 70, 71, 92, 94), le même algorithme étant calculé par les deux ou plusieurs noyaux de calcul (4, 6, 52, 54, 74, 75) ou des algorithmes différents étant calculés par les deux ou plusieurs noyaux de calcul (4, 6, 52, 54, 74, 75).

3. Procédé selon l'une des revendications précédentes, dans lequel au moins deux tâches (8, 10, 64, 66, 82, 84, 86, 88, 90) sont synchronisées l'une par rapport à l'autre.

4. Procédé selon l'une des revendications précédentes, dans lequel les résultats de chaque tâche (8, 10, 64, 66, 82, 84, 86, 88, 90) sont inscrits dans une cellule de mémoire propre et dans lequel les résultats de la comparaison sont comparés mutuellement.

5. Procédé selon l'une des revendications précédentes, dans lequel il est signalé au registre de signatures (18, 20, 56, 58, 76, 78) que le dernier résultat a été écrit, un signal étant envoyé aux registres de signatures (18, 20, 56, 58, 76, 78) par les logiciels présents sur chaque noyau de calcul (4, 6, 52, 54, 74, 75) concerné ou chaque registre de signature (18, 20, 56, 58, 76, 78) signale par son logiciel avant l'inscription d'un premier résultat combien de valeurs doivent être inscrites.

6. Unité de calcul qui présente au moins deux noyaux de calcul (4, 6, 52, 54, 74, 75),
un registre de signatures doté de plusieurs entrées étant associé à au moins deux des deux ou plusieurs noyaux de calcul (4, 6, 52, 54, 74, 75),
deux des noyaux de calcul (4, 6, 52, 54, 74, 75) étant configurés chacun pour exécuter au moins une tâche (8, 10, 64, 66, 82, 84, 86, 88, 90),
pour calculer un algorithme pour chaque tâche (8, 10, 64, 66, 82, 84, 86, 88, 90) et pour inscrire les résultats (12, 14, 70, 71, 92, 94) calculés dans le registre de signatures (18, 20, 56, 58, 76, 78) associé,
au moins un composant de l'unité de calcul (2, 50, 73) étant configuré pour comparer les résultats (12, 14, 70, 71, 92, 94) inscrits dans les registres de signatures (18, 20, 56, 58, 76, 78),
**caractérisée en ce que**
les tâches (8, 10, 64, 66, 82, 84, 86, 88, 90) sont lancées dans une succession prédéterminée,
**en ce qu'**une première tâche (8, 10, 64, 66, 82, 84, 86, 88, 90) configurée comme tâche d'application et activant moins une deuxième tâche (8, 10, 64, 66, 82, 84, 86, 88, 90) configurée comme tâche de comparaison est exécutée par chaque noyau de calcul (4, 6, 52, 54, 74, 75) et
**en ce que** les valeurs des deux registres de signatures (18, 20, 56, 58, 76, 78) sont comparées par chaque tâche (8, 10, 64, 66, 82, 84, 86, 88, 90) configurée comme tâche de comparaison.

7. Unité de calcul selon la revendication 6, dans laquelle les noyaux de calcul (4, 6, 52, 54, 74, 75) présentent des opérateurs de comparaison configurés pour comparer les résultats (12, 14, 70, 71, 92, 94).

8. Programme informatique doté de moyens de code de programme permettant d'exécuter toutes les étapes d'un procédé selon l'une des revendications 1 à 5 lorsque le programme informatique est exécuté sur un ordinateur, et en particulier dans une unité de calcul (2, 50, 73) selon les revendications 6 ou 7.
